# EUROPEAN PATENT APPLICATION

(11) **EP 3 346 654 A1**
(43) Date of publication of application: **11.07.2018**
(21) Application number: 17305010.5
(22) Date of filing: 05.01.2017
(51) Int. Cl.: H04L 25/02, H04J 3/06, H04L 7/00

(54) **A DEVICE FOR TRANSMITTING A SYNCHRONIZING SIGNAL**

(71) Applicant: Alcatel Lucent, 91620 Nozay (FR)
(72) Inventor: ARVAPALLY, Radhakrishna, 122002 Gurgaon (IN); D, PRAKASH, 122002 Gurgaon (IN)
(74) Representative: Loyer & Abello

(57) **Abstract**

A system for transmitting a clock synchronization signal (129) in a communication network, comprising:
- a first node (101) receiving a clock synchronization signal and comprising a differential module (126) configured to send a positive amplitude-modulated train of synchronization pulses (45) to a first pair of twisted wires, and a negative amplitude-modulated train of synchronization pulses (78) to a second pair of twisted wires, an end of each of the twisted wires of the second pair of twisted wires,
- a second node (102) of the network comprising a differential module (134) connected to the twisted pairs of wires, and configured to receive the positive amplitude-modulated train of synchronization pulses (45) and the negative amplitude-modulated train of synchronization pulses (78), the differential module (134) being configured to retrieve the clock synchronization signal.

## Description

### Field of the invention

The invention relates to the domain of clock synchronisation in nodes of a packet switching network, for example in small cells in Long Term Evolution (LTE) networks.

### Background

Frequency and phase synchronization are critical in small cells operation in LTE networks.

Some protocols are currently used for the distribution of a reference frequency and/or a reference phase on LTE networks. For example, protocols as Network Time Protocol (NTP) specified in RFC 1305 or Precision Time Protocol (PTP) are used, providing a synchronization signal from dedicated servers. A physical layer technology for the distribution of a reference frequency on an Ethernet network is also used, referred to as Synchronous Ethernet. As used today, these solutions are consuming network bandwidth and/or expensive.

In some cases, Global Positioning System (GPS) receivers are embedded in communication devices or nodes to provide synchronization. In indoor environment, the GPS signals may be too weak to be received by the communication devices as the GPS signals do not penetrate in the buildings.

### Summary

One aim of the invention is to provide an alternative for synchronizing small cells in a communication network. An idea at the basis of the invention is to transport a synchronization signal on a LAN cable, e.g. Ethernet cable.

Another idea at the basis of the invention is to provide a device for transmitting both a synchronization signal and data signals in the same cabling between nodes of the networks.

To do this, the invention provides a system for transmitting a clock synchronization signal in a communication network, comprising:
- a first node of the network, the first node comprising a first pair of wire ports, a second pair of wire ports and a clock reference port, wherein the clock reference port is configured for receiving a clock synchronization signal, the first node further comprising a differential module connected to the clock reference port and to the pairs of wire ports of the first node, the differential module being configured to generate a positive amplitude-modulated train of synchronization pulses carrying the clock synchronization signal and a negative amplitude-modulated train of synchronization pulses which is the opposite of the positive amplitude-modulated train of synchronization pulses, the differential module being further configured to send the positive amplitude-modulated train of synchronization pulses to the first pair of wire ports and the negative amplitude-modulated train of synchronization pulses to the second pair of wire ports,
- a first pair of twisted wires, an end of each of the twisted wires of the first pair of twisted wires being connected to a wire port of the first pair of wire ports,
- a second pair of twisted wires, an end of each of the twisted wires of the second pair of twisted wires being connected to a wire port of the second pair of wire ports,
- a second node of the network, the second node comprising a first pair of wire ports and a second pair of wire ports, the other end of each of the twisted wires of the first pair of twisted wires being connected to a wire port of the first pair of wire ports of the second node, and the other end of each of the twisted wires of the second pair of twisted wires being connected to a wire port of the second pair of wire ports of the second node, the second node further comprising a differential module connected to the pairs of wire ports of the second node, wherein the differential module is configured to receive the positive amplitude-modulated train of synchronization pulses from the first pair of wire ports of the second node and to receive the negative amplitude-modulated train of synchronization pulses from the second pair of wire ports, the second node further comprising a synchronization port connected to the differential module, wherein the differential module is configured to retrieve the clock synchronization signal from the positive amplitude-modulated train of synchronization pulses and the negative amplitude-modulated train of synchronization pulses, wherein the synchronization port is configured for receiving the clock synchronization signal.

In an embodiment, the invention also provides a method for transmitting a synchronizing signal from a first node of a communication network to a second node of the communication network, wherein the first node and the second node are connected by two pairs of twisted wires, comprising:
- transmitting a clock synchronization signal from the first node to the second node by generating a synchronizing differential signal from the clock synchronization signal, and transmitting the synchronizing differential signal to a first and second pair of twisted wires, the synchronizing differential signal comprising a first differential signal part being a positive signal modulated in amplitude of the clock synchronization signal and a second differential signal part being the opposite of the first differential signal part, wherein the first differential signal part is transmitted as a positive variable offset through the first pair of twisted wires and the second differential signal part is transmitted as a negative variable offset through the second pair of twisted wires,
receiving the synchronization differential signal in the second node and recovering the clock synchronization signal from the synchronization differential signal.

Thanks to these features, a clock synchronization signal may be transmitted in Ethernet cables supporting 10/100 or 1000Mbps speeds.

According to embodiments, such a system and/or such a method may comprise one or more of the following features:
In an embodiment, the method further comprises:
   - transmitting a first data signal from the first node to the second node by generating a first differential signal from the first data signal, and transmitting the first differential signal to the first pair of twisted wires, wherein the first differential signal comprises a first differential signal part being a positive signal modulated in amplitude of the first data signal and having the positive variable offset and a second differential signal part being a negative signal modulated in amplitude and having the positive variable offset, wherein the first differential signal part is transmitted through a first wire of the first pair of twisted wires and the second differential signal part is transmitted through a second wire of the first pair of twisted wires,

   - receiving, in the second node, the first differential signal, and recovering, from the first differential signal, the first data signal,
   - transmitting a second data signal from the second node to the first node by generating a second differential signal from the second data signal, and transmitting the second differential signal to the second pair of twisted wires, wherein the second differential signal comprises a first differential signal part being a positive signal modulated in amplitude of the second data signal and having the negative variable offset and a second differential signal part being a negative signal modulated in amplitude and having the negative variable offset, wherein the first differential signal part is transmitted through a first wire of the second pair of twisted wires and the second differential signal part is transmitted through a second wire of the second pair of twisted wires,
   receiving, in the second node, the second differential signal, and recovering, from the second differential signal, the second data signal.

For example, such a method is suitable for use in 10/100 Mbps network.

In an embodiment, the first node and the second node are further connected by a third and a fourth pair of twisted wires, the method further comprising:
- transmitting a third data signal from the first node to the second node by generating a third differential signal from the third data signal, and transmitting the third differential signal to a third pair of twisted wires, wherein the third differential signal comprises a third differential signal part being a positive signal modulated in amplitude of the third data signal and having a determined amplitude offset and a second differential signal part being the opposite of the first differential signal part, wherein the first differential signal part is transmitted through a first wire of the third pair of twisted wires and the second differential signal part is transmitted through a second wire of the third pair of twisted wires,
- receiving, in the second node, the third differential signal, and recovering, from the third differential signal, the third data signal,
- transmitting a fourth data signal from the second node to the first node by generating a fourth differential signal from the fourth data signal, and transmitting the fourth differential signal to a fourth pair of twisted wires, wherein the fourth differential signal comprises a first differential signal part being a positive signal modulated in amplitude of the fourth data signal and having a determined amplitude offset and a second differential signal part being the opposite of the first differential signal part, wherein the first differential signal part is transmitted through a first wire of the fourth pair of twisted wires and the second differential signal part is transmitted through a second wire of the fourth pair of twisted wires,
receiving, in the first node, the fourth differential signal, and recovering, from the fourth differential signal, the fourth data signal.

For example, such a method is suitable for use in 10/100 Mbps networks.

In a further embodiment, the first pair of twisted wires and the second pair of twisted wires are bidirectional, the second node transmits a first contra propagating data signal through the first pair of twisted wires to the first node and the first node transmits a second contra propagating data signal through the second pair of twisted wires to the second node.

In an embodiment, the first node further comprises two differential devices, and the second node further comprises two differential devices,
the data port of the first differential device of the first node being configured to receive a first data signal, the differential ports of the first differential device of the first node being connected to the first pair of wire ports of the first node, the offset port of the first differential device of the first node being connected to the differential module of the first node, the offset port of the first differential device of the first node being configured to receive the positive amplitude-modulated train of synchronization pulses, the differential ports of the first differential device of the first node being configured to transmit a first differential signal whose offset is the amplitude-modulated train of synchronization pulses,
the differential ports of the first differential device of the second node being connected to the first pair of wire ports of the second node, the offset port of the first differential device of the second node being connected to the differential module of the second node, the differential ports of the first differential device of the second node being configured to receive the first differential signal whose offset is the positive amplitude-modulated train of synchronization pulses, the offset port of the first differential device of the second node being configured to retrieve the positive amplitude-modulated train of synchronization pulses, the data port of the second node being configured to retrieve the first data signal,
the data port of the second differential device of the second node being configured to receive a second data signal, the differential ports of the second differential device of the second node being connected to the second pair of wire ports of the second node,
the differential ports of the second differential device of the first node being connected to the second pair of wire ports of the first node,
the offset port of the second differential device of the first node being connected to the differential module of the first node, the offset port of the second differential device of the first node being configured to receive the negative amplitude-modulated train of synchronization pulses,
the differential ports of the second differential device of the second node being configured to transmit a second differential signal whose offset is the negative amplitude-modulated train of synchronization pulses,
the differential ports of the second differential device of the second node being configured to emit the second differential signal whose offset is the negative amplitude-modulated train of synchronization pulses, the offset port of the second differential device of the second node being connected to the differential module of the second node, the offset port of the second differential device of the second node being configured to retrieve the negative amplitude-modulated train of synchronization pulses, the data port of the first node being configured to retrieve the second data signal.

In an embodiment, a differential device is either configured for generating a differential signal from a received data signal, or for generating a data signal from a received differential signal,
the differential devices having each a data port configured to receive or emit a data signal, a pair of differential ports configured to emit or receive a differential signal, a device body, and an offset port configured to receive or emit a determined amplitude offset,
the device body being configured either to generate a pair of differential signal parts in the pair of differential ports when the data port receives a data signal or to generate a data signal in the data port when the pair of differential ports receives a pair of differential signal parts,
the data signal being modulated in amplitude to constitute a train of pulses, the first differential signal part being a positive signal also modulated in amplitude to constitute the train of pulses of the data signal, the first differential signal part further having the determined amplitude offset, the second differential signal part being a negative signal which is the opposite of the first differential signal part, the differential signal being constituted by the first and second differential signal parts.

In an embodiment, the system further comprises two other pair of twisted wires, wherein the first node and second node further comprise two differential devices each and two other pair of wire ports each, the pair of differential ports of the differential devices being connected to the pair of wire ports, the pair of twisted wires being connected to the pair of wire ports,
- the third differential device (114) of the second node (102) being configured to receive a third data signal (123) and to transmit a third differential signal, a third differential device of the first node (101) being configured to receive the third differential signal and to retrieve the third data signal from the third differential signal,
- the fourth differential device (114) of the first node (102) being configured to receive a fourth data signal (123) and to transmit a fourth differential signal, a fourth differential device of the second node (101) being configured to receive the fourth differential signal and to retrieve the fourth data signal from the fourth differential signal.

In a further embodiment, the third pair of twisted wires and the fourth pair of twisted wires are bidirectional, the second node transmits a third contra propagating data signal through the third pair of twisted wires to the first node and the first node transmits a fourth contra propagating data signal through the fourth pair of twisted wires to the second node.

For example, such a method is suitable for use in 1000Mbps networks.

In an embodiment, the four twisted pairs of wires belongs to an Ethernet cable connecting both the first node and the second node, each wire comprising a first end and a second end, each first end being connected to a first wire plug, and each second end being connected to a second wire plug, wherein the first wire plugs are arranged in the eight wire ports of the first node and the second wire plugs are arranged in the eight wire ports of the second node, wherein wire plugs of a same pair of wires are arranged on a same pair of wire ports.

In an embodiment, the wire ports and the wire plugs are arranged so as to constitute an identical determined motif. The wire ports of a pair of wires ports may be adjacent or not in the identical determined motif.

In an embodiment, the wire ports and the wire plugs in the determined motif are arranged in an identical sequential manner.

In an embodiment, the differential devices are selected in a list constituted of: transformers, centre-tapped transformers and differential amplifiers.

In an embodiment, the Ethernet cable is a CAT 5 Ethernet cable.

In an embodiment, wherein the clock synchronization signal is a pulse train selected in the list consisting of pulse per second PPS, pulse per two second PP2S, or 10MHz or any frequency.

In an embodiment, power over Ethernet is further applied from the first node to the second node using the third and fourth differential devices.

The communication network may be any data network. In an embodiment, the communication network is a radio access network.

In an embodiment, the radio access network is a Local Area Network (LAN).

In an embodiment, the first and the second nodes are selected in the list consisting of: a switch, a service aggregation router, or a small cell.

In an embodiment, the clock synchronization signal carries a frequency and/or phase reference, wherein the second node further comprises a clock to be synchronized, the clock being configured to receive the clock synchronization signal and to synchronize to the frequency and/or phase reference.

An idea behind the invention is to provide a synchronisation between clocks of a LAN network through the same Ethernet cable used for transmitting data signals.

### Brief description of the drawings

The invention will be better understood, and other purposes, details, characteristics, and advantages thereof will become more clearly apparent upon examining the following description of multiple particular embodiments of the invention, which are given only by way of illustrative and non-limiting examples, with reference to the attached drawings. In these drawings:
Figure 1 is a functional schematic representation of a Local Access Network (LAN) connected to the internet.
Figure 2 is a functional schematic representation of a device for transmitting synchronizing signal between two connected nodes of the LAN network of Figure 1 according to an embodiment of the invention.
Figure 3 is a functional schematic representation of a device for transmitting synchronizing signal between two connected nodes of the LAN network of Figure 1 according to an embodiment of the invention.
Figure 4 is a schematic representation of differential signals which are transmitted from the first node to the second node of the device of figure 2 or 3.
Figures 5 is a schematic representation of synchronization signal and data signals to be transmitted from the first node to the second node of the device of figure 1 or 2, and the transmitted signals actually transmitted from the first node to the second node of the device of figure 2 or 3.

### Detailed description of the embodiments

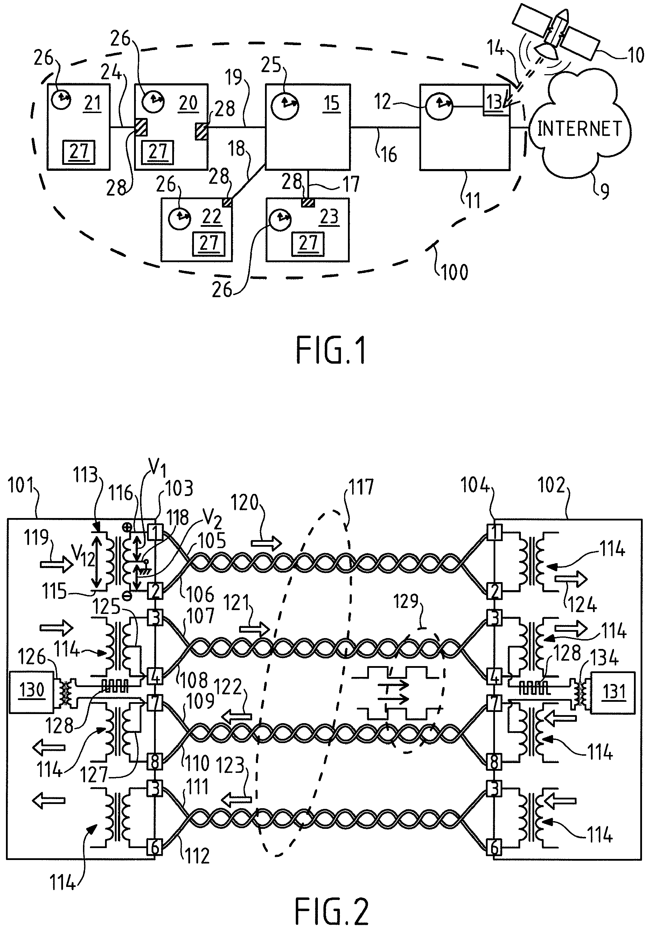

With reference to Figure 1, a LAN network 100 will be described, which comprises a plurality of connected elements. The topology of the LAN network 100 and the number of connected elements and links are purely illustrative.

The LAN network 100 comprises a service aggregation router 11 interfacing the internet network 9 and the LAN network 100. The LAN network 100 also comprises a switch 15 and small cells 20, 21, 22 and 23. The small cells 20, 22 and 23 are connected to the switch 15 by Ethernet cables 17, 18 and 19. The small cell 21 is connected to the small cell 20 by an Ethernet cable 24.The switch 15is connected to the service aggregation router 11 by an Ethernet cable 16.

The Ethernet cables 16, 17, 18, 19 and 24 are configured to transmit data signals between the connected elements of the LAN network 100. The use of Power over Ethernet (PoE) is possible between some of the connected elements in order to supply power to some small cells.

The service aggregation router 11 comprises a GPS signal receiver 13 for receiving GPS signals from a GPS satellite 10. The service aggregation router 11 also comprises a clock 12 synchronized thanks to synchronization methods as known in the art. The clock 12 is synchronized with any external reference sources to which the clock 12 has access, for example GPS type satellite system, atomic clock, synchronous Ethernet, etc. For example, the clock 12 is synchronized thanks to the GPS receiver 13 receiving a GPS timing signal 14 from the GPS satellite 10. Alternatively, the clock 12 is synchronized by the service aggregation router 11 receiving a timing signal from PTP or NTP servers. For the sake of clarity, the clock 12 is shown symbolically as a hand clock.

The switch 15 comprises a clock 25 and switching means for switching packets from the service aggregation router 11 to small cells and from the small cells to the service aggregation router 11.

Timing over Ethernet (ToE) is used on the Ethernet cable 16 between the service aggregation router 11 and the switch 15 in order to synchronize the clock 25 of the switch 15 with the clock 12 of the service aggregation router 11.

The small cells 20, 21, 22 and 23 may be for example HeNB, Home E-node B, Enterprise eNodeB or any indoor network element equipment.

The small cells 20, 21, 22 and 23 are all equipped with Ethernet interfaces 28 for connecting the Ethernet cables 17, 18, 19 and 24 in a plug-and-socket mean. The Ethernet interfaces 28 are configured to emit and receive data streams of data packets. The small cells 20, 21, 22 and 23 are further equipped with clocks 26 and with processing means 27.

The clocks 26 are timing modules acting as frequency and/or phase reference for triggering processing operations on data packets, by the processing means, and emitting data packets by the Ethernet interface.

Therefore, the clocks 26 of the small cells 20, 21, 22 and 23 need to be synchronized. To do this, the nodes implement a synchronisation protocol used to synchronise frequency and/or phase of the clocks 26. The synchronisation of the frequency means the pooling of a reference frequency in the nodes of the communication network such that the nodes of the communication network use the reference frequency as a common reference. The synchronisation of the phase means the pooling of a reference phase.

The synchronisation makes the clocks 26 subservient to the clock 25 serving as a common reference.

Synchronizing all the clocks in the LAN network 100, for example in indoor environment, is performed through the Ethernet cables 17, 18, 19 and 24 as described below with reference to Figures 2 to 5.

In reference to Figure 2, a first node 101 and a second node 102 of the LAN network 100 of Figure 1 are represented. For instance, the first node 101 is the switch 25 represented on Figure 1 and the second node 102 is the small cell 23 represented on Figure 1. However, the illustration and description could also apply to the two chained small cells 20 and 21 represented on Figure 1. The illustration and description could also apply to any Data Network using Ethernet cables.

The first node 101 comprises a clock source 130 and the second node 102 comprises a clock receiver 131. The clock source 130 acts as a clock reference and should transmit a synchronization signal 128 to the clock receiver 131 in order that the clock receiver 131 may synchronize with the clock reference.

In parallel, the first node 101 and the second node 102 should transmit data streams to each other. The first node 101 and the second node 102 are connected by an Ethernet cable 117, for instance a category 5 cable (CAT5).

Both transmitting the data streams and the synchronization signal 128 are performed using the same Ethernet cable 117, as it is described below.

The Ethernet cable 117 comprises four twisted pairs of wires 105 to 112 adapted to transmit modulated electrical signals from a first end to a second end of the Ethernet cable 117. Two pairs of wires 105, 106 and 107, 108 are dedicated to transmit data streams from the first node to the second node. The other two pairs of wires 109, 110 and 111, 112 are dedicated to transmit data streams from the second node to the first node.

The first pictured pair of wires cable comprises a first wire 105 and a second wire 106. As represented, the first and second wires 105 and 106 are twisted. The three other pairs of twisted wires are constituted the same as the first pair of twisted wires, i.e. comprising two twisted wires, respectively wires 107 and 108, 109 and 110; and 111 and 112.

Each end of the Ethernet cable 117 comprises a RJ45 modular connector, also referred to as an eight positions eight contacts (8P8C) plug. The RJ45 modular connector comprises eight electrical pins located on eight different locations on the RJ45 modular connector body. Each of the electrical pin is connected to an end of one of the wires of the twisted pairs of the Ethernet cable 117.

The first node 101 comprises an Ethernet interface 103 and the second node 102 comprises an Ethernet interface 104. The Ethernet interfaces 103 and 104 comprise Ethernet sockets (not represented) adapted to connect the Ethernet cable 117 through the RJ45 modular connectors. An Ethernet socket comprises eight wire ports 1 to 8 for connecting each of the electrical pin of the RJ45 modular connector.

For instance, the wire ports 1 of the first node 101 and of the second node 102 are connected to the pins of the wire 105 and the wire ports 2 are connected to the pins of the wire 106.

The wire ports 1 to 8 are arranged by pair of wire ports. More precisely, the wire port 1 and the wire port 2 are arranged as a pair, the wire port 4 and the wire port 5 are arranged as a pair, the wire port 7 and the wire port 8 are arranged as a pair and the wire port 3 and the wire port 6 are arranged as a pair.

The first node 101 transmits data streams to the second node 102 by emitting data streams that are transmitted from the Ethernet interface 103 of the first node 101 to the Ethernet interface 104 of the second node 102 through the Ethernet cable 117, and the second node 102 transmits data streams to the first node 101 by emitting data streams that are transmitted from the Ethernet interface 104 of the second node 102 to the Ethernet interface 103 of the first node 101 through the Ethernet cable 117 as described below.

Each wire pair 105 and 106, 107 and 108, 109 and 110; and 111 and 112 constitutes a differential pair. Each differential pair is configured to transmit a data stream by differential signalling technique. The data stream is an amplitude modulated data signal. Differential signalling is a transmission technique wherein each wire of the wire pair transmits a signal of the data stream 180° electrical degrees out-of-phase with each other, such that the noise resistance of the data signal is improved. The data stream is recovered by recovering the electrical difference between the two transmitted signals of the data stream.

The two signals are generated by use of a centre-tapped transformer in the emitting node. The two signals propagate through a pair of wires and are received in a centre-tapped transformer in the receiving node.

A centre-tapped transformer is an electrical device for transferring energy between two circuits thanks to electrical induction. The centre-tapped transformer comprises two electrical windings and a core. The electrical windings are referred to as a first and a secondary winding and are each wrapped around the core. Variation of electrical current flowing in the first winding is transformed in variation of electrical current flowing in the secondary winding. The secondary winding is divided in two parts by an additional wire connected across the middle point of the secondary winding by the exact middle point of the secondary winding.

The use of such a centre-tapped transformer will now be described with the example of the centre-tapped transformer 113 represented on Figure 2. The centre-tapped transformer 113 comprises a first winding 115 and a secondary winding 116 with a connected additional wire 118 connected at the precise middle of the wrapping of the secondary winding 116. The secondary winding 116 comprises two ends, each of them connected to a wire port 1 and 2. The additional wire may be connected to any voltage reference, for example to the ground, as represented.

From an input voltage V12 imposed between each end of the first winding 115, the centre-tapped transformer 113 provides between each end of the secondary winding 116 in reference to the additional wire 118 two separate output voltages V1 and V2 equal in magnitude but opposite in polarity to each other.

Therefore, the centre-tapped transformer 113 receiving an amplitude modulated input data stream 119 transmits via the wire ports 1 and 2 of the first node 101 a differential signal 120 through the pair of wires 105 and 106. For the sake of illustration, the differential signals are represented on Figure 2 by arrows.

The centre-tapped transformer 114 connected to the wire ports 4 and 5 in the first node 101 represented on Figure 2 works similarly to the centre-tapped transformer 113, such that a different differential signal 121 is transmitted via the wire pair 107, 108 from the first node 101 to the second node 102. The centre-tapped transformers 114 connected to the wires ports 7,8 and 3, 6 in the second node 102 works similarly to the centre-tapped transformer 113, such that different differential signals 122 and 123 are transmitted via the wire pairs 109, 110 and 111, 112 from the second node 102 to the first node 101.

The use of centre-tapped transformers 114 connected to the wire ports 1 and 2 of the second node 102 for receiving the differential signal 120 will now be described.

The centre-tapped transformer 114 converts the differential signal 120 to an amplitude modulated output data stream 124 in order to recover the information contained in the amplitude modulated input data stream 119. The centre-tapped transformer 114 comprises two windings, one of them being connected by the ends to the wire ports 1 and 2 of the second node. Receiving from the wire ports 1 and 2 of the second node two separate output voltages V1 and V2 equal in magnitude but opposite in polarity to each other, the centre-tapped transformer 114 recovers between the ends of the other winding the initial input voltage V12.

The centre-tapped transformer 114 connected to the wires ports 4, 5 in the second node 102 works similarly to recover the amplitude modulated input data streams introduced in the pair of wires 107 and 108.

The centre-tapped transformers 114 connected to the wires ports 7, 8 and 3,6 in the first node 101 work similarly to recover the amplitude modulated input data streams introduced in the pair of wires 109, 110 and 111, 112.

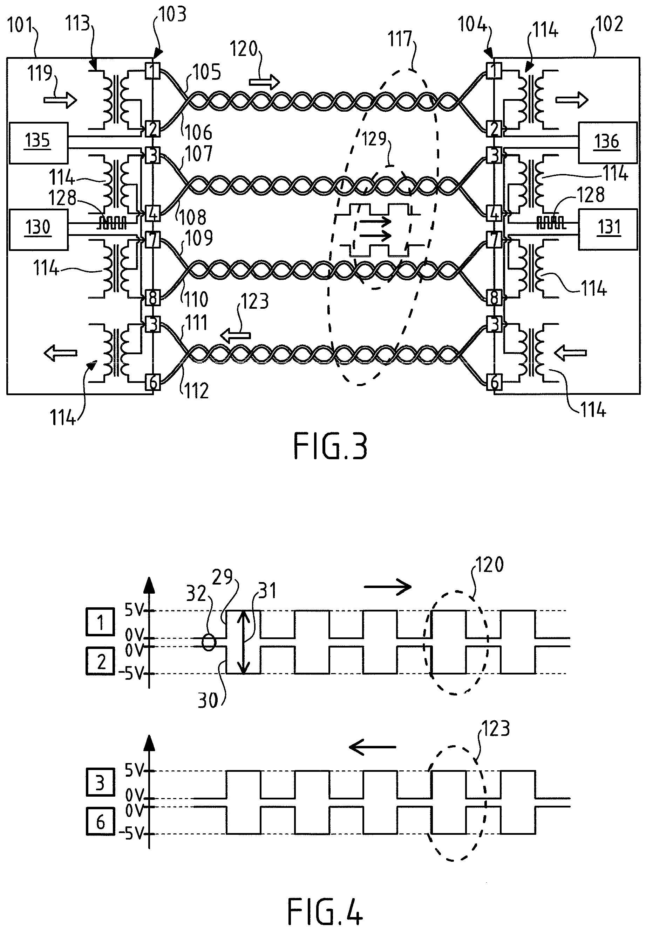

With reference to Figure 4, the differential signals 120 and 123 are pictured. For the sake of illustration, the differential signals 121 and 122 are not pictured.

As represented, the differential signal 120 comprises a first amplitude modulated electrical signal 29 carried by the wire 105 from the wire port 1 of the first node 101 to the wire port 1 of the second node 102.

The first amplitude modulated electrical signal 29 is a train of pulses encoded as follows:
- a "1" bit is encoded by a voltage value equal to zero volt
- a "0" bit is encoded by a voltage value equal to 5 volts

As represented, the differential signal 120 comprises a second amplitude modulated electrical signal 30 carried by the wire 106 from the wire port 2 of the first node 101 to the wire port 2 of the second node 102.

The second amplitude modulated electrical signal 30 is a train of pulses encoded as follows:
- a "1" bit is encoded by a voltage value equal to zero volt
- a "0" bit is encoded by a voltage value equal to - 5 volts

The train of pulses is similar in the first and second amplitude modulated signals 29 and 30.

The differential signal 120 is the difference between the voltage values of the first and second amplitude modulated signals 29 and 30: the "0" bit 31 is encoded by a value of 10 volts and the "1" bit 32 is encoded by a value of zero volt. Therefore, the differential signal 120 is reliable even in electromagnetic perturbation scenario.

The same description applies to the differential signals 121, 122 and 123.

The differential signals 120 to 123 carry four data signals from the first node 101 to the second node 102.

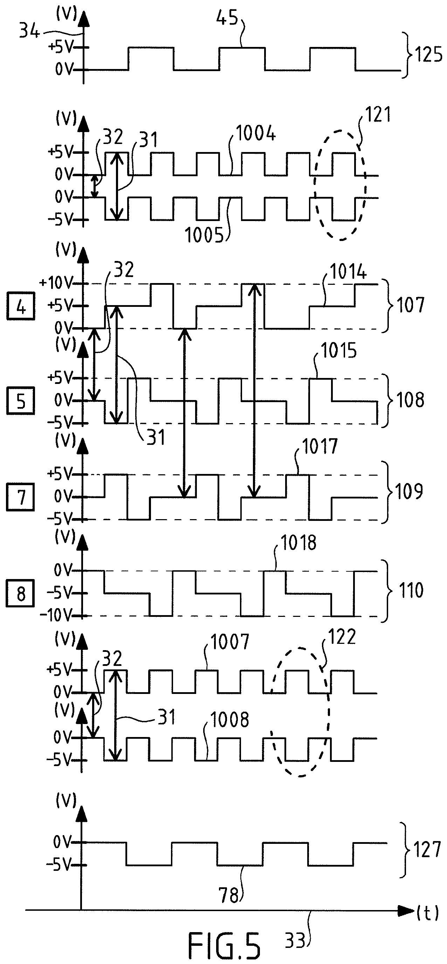

The synchronization of the clocks of the first node 101 and second node 102 will now be described with reference to Figures 2 and 5.

As represented on Figure 2, the first node 101 comprises the clock source 130 configured to transmit the synchronization signal 128 to the second node 102. The synchronization signal 128 is a train of pulses. The clock source 130 acts as a reference frequency and/ or phase as previously described. The first node 101 further comprises a centre tapped transformer 126 configured to receive the synchronization signal 128 from the clock source 130 and to transmit a super differential synchronization signal 129 carried by a pair of wire pairs, i.e. the wire pair 107, 108; and the wire pair 109, 110. The super differential synchronization signal 129 is similar to a differential signal, except that the super differential synchronization signal 129 is the difference between the voltage values of the differential signal 121 and the differential signal 122 instead of being the difference between the voltage values of a first and second amplitude modulated signals.

The centre tapped transformer 126 comprises a first winding receiving the synchronization signal 128 as a voltage difference between the two ends of the first winding. The centre tapped transformer 126 comprises a second winding for emitting the super differential synchronization signal 129. The second winding comprises two ends. The first end is connected to an additional wire 125, also referred to as center tap, and the second end is connected to an additional wire 127, also referred to as center tap, such that the synchronization signal 128 is transmitted on the pair of additional wires 125 and 127.

The additional wires 125 and 127 are respectively connected to the exact middle of the secondary windings of the centre-tapped transformers 114 connected respectively to the wire ports 4, 5 and 7, 8. Therefore, the super differential synchronization signal 129 acts as a voltage reference, also referred to as a modulable offset, for the data stream emitted by the wire ports 4, 5 and for the data stream emitted by the wire ports 7, 8.

Figure 5 represents a plurality of graphs representing the train of pulses transmitted on different wires from the first node 101 to the second node 102 on a common time scale 33 and on a common voltage scale 34.

The pictured pairs of data streams 1004, 1005 and 1007, 1008 represent the respective train of pulses that would be transmitted by the differential signals 121 and 122 if the reference voltage received the exact middle of the secondary windings of the centre-tapped transformers 114 connected respectively to the wire ports 4,5 and 7, 8 was zero volts.

The super differential synchronization signal 129 is pictured, composed of two parts referred to the first part 45 and the second part 78. For the sake of illustration, the frequency of the train of pulse of the synchronization signal 128 is the double of the frequency of the train of pulse of the differential signals 120, 121, 122 and 123. In general, any frequency may be selected for the train of pulse of the synchronization signal 128, independently of the frequency selected for the train of pulses of the differential signals 120, 121, 122 and 123.

Instead of the reference voltage being zero volts, the wire pairs 107, 108 and 109, 110 are imposed with a differential reference voltage, i.e. a train of amplitude modulated bits. The first part 45 is the reference voltage imposed at the end of the additional wire 125 and the second part 78 is the reference voltage imposed at the end of the additional wire 127.

The amplitude modulated signals actually carried by the wires 107 to 110 are pictured with reference to numbers 1014 to 1018.

The first transmitted data stream and respectively second transmitted data stream are recovered by analysis the voltage differences between the amplitude modulated signals 1014 and 1015 and respectively between the amplitude modulated signals 1017 and 1018. The voltage difference helps recovering the "0" bits 31 and the "1" bits 32 of the train of pulses encoding the first and second data streams.

The voltage reference of the pairs of wires 107, 108 and 109, 110 is recovered by use of additional wires 135 and 136 connected to the end of a centre-tapped transformer 134 and to the exact middle of the windings of the centre tapped transformers 114 connected to the pairs of wire ports 4, 5 and 7, 8. Therefore, the synchronization signal 128 is recovered in the second node 102 and transmitted to the clock receiver 131 for synchronization.

Optionally, the four pairs of wires are further used to transmit bidirectional signals (not represented). In such a scenario, the Ethernet cable 117 enable transmitting data streams at a bit rate up to 1000Mbps between nodes 101 and 102.

Figure 3 pictures a variant of the nodes 101 and 102 represented on Figure 2.

The nodes 101 and 102 of the variant are equipped with the same Ethernet interfaces 103 and 104 as the nodes 101 and 102 pictured on Figure 1 and the Ethernet cable 117 used to connect the nodes 101 and 102 is the same.

The variant presents a few differences.

As a first difference, in the variant, the first node 101 is further equipped with a power sourcing equipment 135 and the second node 102 is equipped with a powered device 136 configured to be supplied by electrical power provided from the power sourcing equipment 135 of the first node 101. The power sourcing equipment 135 and powered device 136 are connected to the exact middle of windings of centre-tapped transformers 114 connected to the wire ports 1,2 and 3, 6 of the first node 101 and second node 102 in order to transmit power over Ethernet (PoE) in a known manner.

As a second difference, in the variant, only two pairs of wires 105, 106 and 111, 112 are used to transmit differential signals 120 and 123 to the second node 102. The Ethernet cable 117 enable transmitting data streams at a bit rate up to 10/100Mbps between nodes 101 and 102 in the second variant.

As a third difference, the two pairs of wires 107, 108 and 109, 110 are only used to transmit the synchronization signal 128 from the first node 101 to the second node 102. Therefore, the first node 101 and the second node 102 are not compulsory equipped with the centre-tapped transformers 126 and 134 represented on Figure 1.

As a fourth difference, the wire ports 1 to 8 are configured to transmit or receive 10/100 Mbps.

Some of the elements shown, may be constructed in various forms, in a stand-alone or distributed fashion, using hardware and/or software components. Hardware components that may be used are application-specific integrated circuits, field-programmable gate arrays, or microprocessors. Software components may be written in various programming languages, such as C, C++, Java, or VHDL. This list is not exhaustive.

Although the invention has been described in connection with multiple specific embodiments, it is naturally not in any way limited to them, and comprises all technical equivalents of the means described, as well as their combinations, if said combinations fall within the scope of the invention. In particular, the pairs of wires assigned to a particular function, as for example transmitting the synchronization signal 128 of transmitting data streams and PoE may be permuted without departing from the scope of the invention.

The use of the verb "comprise" or "include" and their conjugated forms does not exclude the presence of elements or steps other than those set forth in a claim. The use of the indefinite article "a" or "an" for an element or step does not, unless otherwise stated, excluded the presence of a plurality of such elements or steps. Multiple means or modules may be depicted by a single hardware element.

In the claims, any reference sign within parentheses should not be interpreted as limiting the claim.

## Claims

1. A system for transmitting a clock synchronization signal (129) in a communication network, comprising:
- a first node (101) of the network, the first node comprising a first pair of wire ports (4, 5), a second pair of wire ports (7, 8) and a clock reference port, wherein the clock reference port is configured for receiving a clock synchronization signal, the first node (101) further comprising a differential module (126) connected to the clock reference port and to the pairs of wire ports of the first node, the differential module being configured to generate a positive amplitude-modulated train of synchronization pulses (45) carrying the clock synchronization signal and a negative amplitude-modulated train of synchronization pulses (78) which is the opposite of the positive amplitude-modulated train of synchronization pulses, the differential module being further configured to send the positive amplitude-modulated train of synchronization pulses (45) to the first pair of wire ports and the negative amplitude-modulated train of synchronization pulses (78) to the second pair of wire ports,
- a first pair of twisted wires, an end of each of the twisted wires of the first pair of twisted wires being connected to a wire port of the first pair of wire ports,
- a second pair of twisted wires, an end of each of the twisted wires of the second pair of twisted wires being connected to a wire port of the second pair of wire ports,
- a second node (102) of the network, the second node comprising a first pair of wire ports (4, 5) and a second pair of wire ports (7, 8), the other end of each of the twisted wires of the first pair of twisted wires being connected to a wire port of the first pair of wire ports of the second node, and the other end of each of the twisted wires of the second pair of twisted wires being connected to a wire port of the second pair of wire ports of the second node, the second node further comprising a differential module (134) connected to the pairs of wire ports of the second node, wherein the differential module is configured to receive the positive amplitude-modulated train of synchronization pulses (45) from the first pair of wire ports of the second node and to receive the negative amplitude-modulated train of synchronization pulses (78) from the second pair of wire ports, the second node further comprising a synchronization port connected to the differential module, wherein the differential module (134) is configured to retrieve the clock synchronization signal from the positive amplitude-modulated train of synchronization pulses (45) and the negative amplitude-modulated train of synchronization pulses (78), wherein the synchronization port is configured for receiving the clock synchronization signal.

2. A system according to claim 1, wherein the first node further comprises two differential devices, and the second node further comprises two differential devices,
wherein a differential device (113, 114) is either configured for generating a differential signal (29, 30) from a received data signal (120), or for generating a data signal (120) from a received differential signal (29, 30),
the differential devices having each a data port configured to receive or emit a data signal, a pair of differential ports configured to emit or receive a differential signal, a device body, and an offset port configured to receive or emit a determined amplitude offset,
the device body being configured either to generate a pair of differential signal parts (29, 30) in the pair of differential ports when the data port receives a data signal (120) or to generate a data signal in the data port when the pair of differential ports receives a pair of differential signal parts,
the data signal (120) being modulated in amplitude to constitute a train of pulses, the first differential signal part (29) being a positive signal also modulated in amplitude to constitute the train of pulses of the data signal, the first differential signal part further having the determined amplitude offset, the second differential signal part (30) being a negative signal which is the opposite of the first differential signal part, the differential signal being constituted by the first and second differential signal parts,
the data port of the first differential device (114) of the first node (101) being configured to receive a first data signal (121), the differential ports of the first differential device of the first node being connected to the first pair of wire ports of the first node, the offset port (125) of the first differential device of the first node (101) being connected to the differential module of the first node, the offset port (125) of the first differential device of the first node being configured to receive the positive amplitude-modulated train of synchronization pulses (45), the differential ports of the first differential device of the first node being configured to transmit a first differential signal whose offset is the amplitude-modulated train of synchronization pulses (45),
the differential ports of the first differential device (114) of the second node (101) being connected to the first pair of wire ports of the second node, the offset port (125) of the first differential device of the second node (101) being connected to the differential module of the second node, the differential ports of the first differential device of the second node being configured to receive the first differential signal whose offset is the positive amplitude-modulated train of synchronization pulses (45), the offset port (125) of the first differential device of the second node being configured to retrieve the positive amplitude-modulated train of synchronization pulses (45), the data port of the second node being configured to retrieve the first data signal,
the data port of the second differential device (114) of the second node (101) being configured to receive a second data signal (121), the differential ports of the second differential device of the second node being connected to the second pair of wire ports of the second node,
the differential ports of the second differential device (114) of the first node (101) being connected to the second pair of wire ports of the first node,
the offset port (127) of the second differential device of the first node (101) being connected to the differential module of the first node, the offset port (127) of the second differential device of the first node being configured to receive the negative amplitude-modulated train of synchronization pulses (78),
the differential ports of the second differential device of the second node being configured to transmit a second differential signal whose offset is the negative amplitude-modulated train of synchronization pulses (78),
the differential ports of the second differential device of the second node being configured to emit the second differential signal whose offset is the negative amplitude-modulated train of synchronization pulses (78), the offset port of the second differential device of the second node (101) being connected to the differential module of the second node, the offset port of the second differential device of the second node being configured to retrieve the negative amplitude-modulated train of synchronization pulses (78), the data port of the first node being configured to retrieve the second data signal.

3. A system according to claim 2, further comprising two other pair of twisted wires, wherein the first node and second node further comprise two differential devices each and two other pair of wire ports each, the pair of differential ports of the differential devices being connected to the pair of wire ports, the pair of twisted wires being connected to the pair of wire ports,
- the third differential device (114) of the second node (102) being configured to receive a third data signal (123) and to transmit a third differential signal, a third differential device of the first node (101) being configured to receive the third differential signal and to retrieve the third data signal from the third differential signal,
- the fourth differential device (114) of the first node (102) being configured to receive a fourth data signal (123) and to transmit a fourth differential signal, a fourth differential device of the second node (101) being configured to receive the fourth differential signal and to retrieve the fourth data signal from the fourth differential signal.

4. A system according to claim 3, wherein the four twisted pairs of wires (105 and 106; 107 and 108; 109 and 110; 111 and 112) belongs to an Ethernet cable (107) connecting both the first node (101) and the second node (102), each wire comprising a first end and a second end, each first end being connected to a first wire plug, and each second end being connected to a second wire plug, wherein the first wire plugs are arranged in the eight wire ports (1 to 8) of the first node (101) and the second wire plugs are arranged in the eight wire ports of the second node (102), wherein wire plugs of a same pair of wires are arranged on a same pair of wire ports.

5. A system according to claim 1, wherein the differential devices (113, 114) are selected in a list constituted of: transformers, centre-tapped transformers and differential amplifiers.

6. A system according to claim 4, wherein the Ethernet cable (117) is a CAT 5 Ethernet cable.

7. A system according to claim 1, wherein the clock synchronization signal is a pulse train selected in the list consisting of pulse per second (PPS), pulse per two second (PP2S), or 10MHz.

8. A system according to claim 5, wherein power over Ethernet is further applied from the first node (101) to the second node (102) using the third and fourth differential devices (114).

9. A system according to claim 1, wherein the communication network is a radio access network.

10. A system according to claim 9, wherein the first and the second nodes (102) are selected in the list consisting of: a switch, a service aggregation router, or a small cell.

11. A system according to claim 1, wherein the clock synchronization signal (129) carries a frequency and/or phase reference, wherein the second node (102) further comprises a clock to be synchronized, the clock being configured to receive the clock synchronization signal and to synchronize to the frequency and/or phase reference.

12. A method for transmitting a synchronizing signal from a first node (101) of a communication network to a second node (102) of the communication network, wherein the first node (101) and the second node (102) are connected by two pairs of twisted wires, comprising:
- transmitting a clock synchronization signal (129) from the first node (101) to the second node (102) by generating a synchronizing differential signal from the clock synchronization signal, and transmitting the synchronizing differential signal (45, 78) to a first and second pair of twisted wires (107 and 108, 109 and 110), the synchronizing differential signal comprising a first differential signal part (45) being a positive signal modulated in amplitude of the clock synchronization signal and a second differential signal part (78) being the opposite of the first differential signal part, wherein the first differential signal part is transmitted as a positive variable offset through the first pair of twisted wires (107 and 108) and the second differential signal part is transmitted as a negative variable offset through the second pair of twisted wires (109 and 110),
- receiving the synchronization differential signal in the second node (102) and recovering the clock synchronization signal from the synchronization differential signal (45, 78).

13. A method according to claim 12, further comprising:
- transmitting a first data signal (121) from the first node (101) to the second node (102) by generating a first differential signal (1014, 1015) from the first data signal, and transmitting the first differential signal to the first pair of twisted wires (107, 108), wherein the first differential signal comprises a first differential signal part (1014) being a positive signal modulated in amplitude of the first data signal and having the positive variable offset (45) and a second differential signal part (1015) being a negative signal modulated in amplitude and having the positive variable offset (45), wherein the first differential signal part is transmitted through a first wire (107) of the first pair of twisted wires and the second differential signal part is transmitted through a second wire (108) of the first pair of twisted wires,
- receiving, in the second node (102), the first differential signal, and recovering, from the first differential signal, the first data signal (121),
- transmitting a second data signal (122) from the second node (102) to the first node (101) by generating a second differential signal (1017, 1018) from the second data signal (122), and transmitting the second differential signal to the second pair of twisted wires (109 and 110), wherein the second differential signal comprises a first differential signal part (1017) being a positive signal modulated in amplitude of the second data signal and having the negative variable offset (78) and a second differential signal part (1018) being a negative signal modulated in amplitude and having the negative variable offset (78), wherein the first differential signal part is transmitted through a first wire (109) of the second pair of twisted wires and the second differential signal part is transmitted through a second wire (110) of the second pair of twisted wires,
- receiving, in the second node (102), the second differential signal, and recovering, from the second differential signal, the second data signal (122).

14. A method according to claim 12 or 13, wherein the first node (101) and the second node (102) are further connected by a third and a fourth pair of twisted wires, the method further comprising:
- transmitting a third data signal (120) from the first node (101) to the second node (102) by generating a third differential signal from the third data signal, and transmitting the third differential signal to a third pair of twisted wires, wherein the third differential signal (29, 30) comprises a third differential signal part (29) being a positive signal modulated in amplitude of the third data signal and having a determined amplitude offset and a second differential signal part (30) being the opposite of the first differential signal part, wherein the first differential signal part is transmitted through a first wire (105) of the third pair of twisted wires (105 and 106) and the second differential signal part is transmitted through a second wire (106) of the third pair of twisted wires,
- receiving, in the second node (102), the third differential signal (29, 30), and recovering, from the third differential signal, the third data signal (120),
- transmitting a fourth data signal from the second node (102) to the first node (101) by generating a fourth differential signal from the fourth data signal (123), and transmitting the fourth differential signal to a fourth pair of twisted wires (111 and 112), wherein the fourth differential signal comprises a first differential signal part being a positive signal modulated in amplitude of the fourth data signal and having a determined amplitude offset and a second differential signal part being the opposite of the first differential signal part, wherein the first differential signal part is transmitted through a first wire (111) of the fourth pair of twisted wires and the second differential signal part is transmitted through a second wire (112) of the fourth pair of twisted wires,
- receiving, in the first node (101), the fourth differential signal, and recovering, from the fourth differential signal, the fourth data signal (123).

15. A method according to claim 12, wherein the clock synchronization signal (129) carries a frequency and/or phase reference, wherein the second node (102) further comprises a clock (131) to be synchronized, the clock (131) being configured to receive the clock synchronization signal (129) and to synchronize to the frequency and/or phase reference.

## Amended claims

### Amended claims in accordance with Rule 137(2) EPC.

1. A system for transmitting a clock synchronization signal (129) in a communication network, comprising:
- a first node (101) of the network, the first node comprising a first pair of wire ports (4, 5), a second pair of wire ports (7, 8) and a clock reference port, wherein the clock reference port is configured for receiving a clock synchronization signal, the first node (101) further comprising a differential module (126) connected to the clock reference port and to the pairs of wire ports of the first node, the differential module being configured to generate a positive amplitude-modulated train of synchronization pulses (45) carrying the clock synchronization signal and a negative amplitude-modulated train of synchronization pulses (78) which is the opposite of the positive amplitude-modulated train of synchronization pulses, the differential module being further configured to send the positive amplitude-modulated train of synchronization pulses (45) to the first pair of wire ports and the negative amplitude-modulated train of synchronization pulses (78) to the second pair of wire ports,
- a first pair of twisted wires, an end of each of the twisted wires of the first pair of twisted wires being connected to a wire port of the first pair of wire ports,
- a second pair of twisted wires, an end of each of the twisted wires of the second pair of twisted wires being connected to a wire port of the second pair of wire ports,
- a second node (102) of the network, the second node comprising a first pair of wire ports (4, 5) and a second pair of wire ports (7, 8), the other end of each of the twisted wires of the first pair of twisted wires being connected to a wire port of the first pair of wire ports of the second node, and the other end of each of the twisted wires of the second pair of twisted wires being connected to a wire port of the second pair of wire ports of the second node, the second node further comprising a differential module (134) connected to the pairs of wire ports of the second node, wherein the differential module is configured to receive the positive amplitude-modulated train of synchronization pulses (45) from the first pair of wire ports of the second node and to receive the negative amplitude-modulated train of synchronization pulses (78) from the second pair of wire ports, the second node further comprising a synchronization port connected to the differential module, wherein the differential module (134) is configured to retrieve the clock synchronization signal from the positive amplitude-modulated train of synchronization pulses (45) and the negative amplitude-modulated train of synchronization pulses (78), wherein the synchronization port is configured for receiving the clock synchronization signal., wherein the first node further comprises two differential devices, and the second node further comprises two differential devices,
wherein a differential device (113, 114) is either configured for generating a differential signal (29, 30) from a received data signal (120), or for generating a data signal (120) from a received differential signal (29, 30),
the differential devices having each a data port configured to receive or emit a data signal, a pair of differential ports configured to emit or receive a differential signal, a device body, and an offset port configured to receive or emit a determined amplitude offset,
the device body being configured either to generate a pair of differential signal parts (29, 30) in the pair of differential ports when the data port receives a data signal (120) or to generate a data signal in the data port when the pair of differential ports receives a pair of differential signal parts,
the data signal (120) being modulated in amplitude to constitute a train of pulses, the first differential signal part (29) being a positive signal also modulated in amplitude to constitute the train of pulses of the data signal, the first differential signal part further having the determined amplitude offset, the second differential signal part (30) being a negative signal which is the opposite of the first differential signal part, the differential signal being constituted by the first and second differential signal parts,
the data port of the first differential device (114) of the first node (101) being configured to receive a first data signal (121), the differential ports of the first differential device of the first node being connected to the first pair of wire ports of the first node, the offset port (125) of the first differential device of the first node (101) being connected to the differential module of the first node, the offset port (125) of the first differential device of the first node being configured to receive the positive amplitude-modulated train of synchronization pulses (45), the differential ports of the first differential device of the first node being configured to transmit a first differential signal whose offset is the amplitude-modulated train of synchronization pulses (45),
the differential ports of the first differential device (114) of the second node (101) being connected to the first pair of wire ports of the second node, the offset port (125) of the first differential device of the second node (101) being connected to the differential module of the second node, the differential ports of the first differential device of the second node being configured to receive the first differential signal whose offset is the positive amplitude-modulated train of synchronization pulses (45), the offset port (125) of the first differential device of the second node being configured to retrieve the positive amplitude-modulated train of synchronization pulses (45), the data port of the second node being configured to retrieve the first data signal,
the data port of the second differential device (114) of the second node (101) being configured to receive a second data signal (121), the differential ports of the second differential device of the second node being connected to the second pair of wire ports of the second node,
the differential ports of the second differential device (114) of the first node (101) being connected to the second pair of wire ports of the first node,
the offset port (127) of the second differential device of the first node (101) being connected to the differential module of the first node, the offset port (127) of the second differential device of the first node being configured to receive the negative amplitude-modulated train of synchronization pulses (78),
the differential ports of the second differential device of the second node being configured to transmit a second differential signal whose offset is the negative amplitude-modulated train of synchronization pulses (78),
the differential ports of the second differential device of the second node being configured to emit the second differential signal whose offset is the negative amplitude-modulated train of synchronization pulses (78), the offset port of the second differential device of the second node (101) being connected to the differential module of the second node, the offset port of the second differential device of the second node being configured to retrieve the negative amplitude-modulated train of synchronization pulses (78), the data port of the first node being configured to retrieve the second data signal.

2. A system according to claim 1, further comprising two other pair of twisted wires, wherein the first node and second node further comprise two differential devices each and two other pair of wire ports each, the pair of differential ports of the differential devices being connected to the pair of wire ports, the pair of twisted wires being connected to the pair of wire ports,
- the third differential device (114) of the second node (102) being configured to receive a third data signal (123) and to transmit a third differential signal, a third differential device of the first node (101) being configured to receive the third differential signal and to retrieve the third data signal from the third differential signal,
- the fourth differential device (114) of the first node (102) being configured to receive a fourth data signal (123) and to transmit a fourth differential signal, a fourth differential device of the second node (101) being configured to receive the fourth differential signal and to retrieve the fourth data signal from the fourth differential signal.

3. A system according to claim 2, wherein the four twisted pairs of wires (105 and 106; 107 and 108; 109 and 110; 111 and 112) belongs to an Ethernet cable (107) connecting both the first node (101) and the second node (102), each wire comprising a first end and a second end, each first end being connected to a first wire plug, and each second end being connected to a second wire plug, wherein the first wire plugs are arranged in the eight wire ports (1 to 8) of the first node (101) and the second wire plugs are arranged in the eight wire ports of the second node (102), wherein wire plugs of a same pair of wires are arranged on a same pair of wire ports.

4. A system according to claim 1, wherein the differential devices (113, 114) are selected in a list constituted of: transformers, centre-tapped transformers and differential amplifiers.

5. A system according to claim 3, wherein the Ethernet cable (117) is a CAT 5 Ethernet cable.

6. A system according to claim 1, wherein the clock synchronization signal is a pulse train selected in the list consisting of pulse per second (PPS), pulse per two second (PP2S), or 10MHz.

7. A system according to claim 4, wherein power over Ethernet is further applied from the first node (101) to the second node (102) using the third and fourth differential devices (114).

8. A system according to claim 1, wherein the communication network is a radio access network.

9. A system according to claim 8, wherein the first and the second nodes (102) are selected in the list consisting of: a switch, a service aggregation router, or a small cell.

10. A system according to claim 1, wherein the clock synchronization signal (129) carries a frequency and/or phase reference, wherein the second node (102) further comprises a clock to be synchronized, the clock being configured to receive the clock synchronization signal and to synchronize to the frequency and/or phase reference.

11. A method for transmitting a synchronizing signal from a first node (101) of a communication network to a second node (102) of the communication network, wherein the first node (101) and the second node (102) are connected by two pairs of twisted wires, comprising:
- transmitting a clock synchronization signal (129) from the first node (101) to the second node (102) by generating a synchronizing differential signal from the clock synchronization signal, and transmitting the synchronizing differential signal (45, 78) to a first and second pair of twisted wires (107 and 108, 109 and 110), the synchronizing differential signal comprising a first differential signal part (45) being a positive signal modulated in amplitude of the clock synchronization signal and a second differential signal part (78) being the opposite of the first differential signal part, wherein the first differential signal part is transmitted as a positive variable offset through the first pair of twisted wires (107 and 108) and the second differential signal part is transmitted as a negative variable offset through the second pair of twisted wires (109 and 110),
- receiving the synchronization differential signal in the second node (102) and recovering the clock synchronization signal from the synchronization differential signal (45, 78), the method, further comprising:
- transmitting a first data signal (121) from the first node (101) to the second node (102) by generating a first differential signal (1014, 1015) from the first data signal, and transmitting the first differential signal to the first pair of twisted wires (107, 108), wherein the first differential signal comprises a first differential signal part (1014) being a positive signal modulated in amplitude of the first data signal and having the positive variable offset (45) and a second differential signal part (1015) being a negative signal modulated in amplitude and having the positive variable offset (45), wherein the first differential signal part is transmitted through a first wire (107) of the first pair of twisted wires and the second differential signal part is transmitted through a second wire (108) of the first pair of twisted wires,
- receiving, in the second node (102), the first differential signal, and recovering, from the first differential signal, the first data signal (121),
- transmitting a second data signal (122) from the second node (102) to the first node (101) by generating a second differential signal (1017, 1018) from the second data signal (122), and transmitting the second differential signal to the second pair of twisted wires (109 and 110), wherein the second differential signal comprises a first differential signal part (1017) being a positive signal modulated in amplitude of the second data signal and having the negative variable offset (78) and a second differential signal part (1018) being a negative signal modulated in amplitude and having the negative variable offset (78), wherein the first differential signal part is transmitted through a first wire (109) of the second pair of twisted wires and the second differential signal part is transmitted through a second wire (110) of the second pair of twisted wires,
- receiving, in the second node (102), the second differential signal, and recovering, from the second differential signal, the second data signal (122).

12. A method according to claim 11, wherein the first node (101) and the second node (102) are further connected by a third and a fourth pair of twisted wires, the method further comprising:
- transmitting a third data signal (120) from the first node (101) to the second node (102) by generating a third differential signal from the third data signal, and transmitting the third differential signal to a third pair of twisted wires, wherein the third differential signal (29, 30) comprises a third differential signal part (29) being a positive signal modulated in amplitude of the third data signal and having a determined amplitude offset and a second differential signal part (30) being the opposite of the first differential signal part, wherein the first differential signal part is transmitted through a first wire (105) of the third pair of twisted wires (105 and 106) and the second differential signal part is transmitted through a second wire (106) of the third pair of twisted wires,
- receiving, in the second node (102), the third differential signal (29, 30), and recovering, from the third differential signal, the third data signal (120),
- transmitting a fourth data signal from the second node (102) to the first node (101) by generating a fourth differential signal from the fourth data signal (123), and transmitting the fourth differential signal to a fourth pair of twisted wires (111 and 112), wherein the fourth differential signal comprises a first differential signal part being a positive signal modulated in amplitude of the fourth data signal and having a determined amplitude offset and a second differential signal part being the opposite of the first differential signal part, wherein the first differential signal part is transmitted through a first wire (111) of the fourth pair of twisted wires and the second differential signal part is transmitted through a second wire (112) of the fourth pair of twisted wires,
- receiving, in the first node (101), the fourth differential signal, and recovering, from the fourth differential signal, the fourth data signal (123).

13. A method according to claim 11, wherein the clock synchronization signal (129) carries a frequency and/or phase reference, wherein the second node (102) further comprises a clock (131) to be synchronized, the clock (131) being configured to receive the clock synchronization signal (129) and to synchronize to the frequency and/or phase reference.
